**Europäisches Patentamt**

**European Patent Office**

**Office européen des brevets**

(19)

(11) Numéro de publication: **0 200 576**
**B1**

(12) **FASCICULE DE BREVET EUROPEEN**

(45) Date de publication du fascicule du brevet:
**11.05.88**

(51) Int. Cl.⁴: **B 60 N 1/06**

(21) Numéro de dépôt: **86400464.3**

(22) Date de dépôt: **05.03.86**

(54) **Dispositif permettant le réglage de l'assiette d'un siège de véhicule.**

(30) Priorité: **07.03.85 FR 8503383**

(43) Date de publication de la demande:
**05.11.86 Bulletin 86/45**

(45) Mention de la délivrance du brevet:
**11.05.88 Bulletin 88/19**

(84) Etats contractants désignés:
**AT BE CH DE GB IT LI LU NL SE**

(56) Documents cités:
**EP - A - 0 029 377**
**EP - A - 0 096 803**
**DE - A - 2 833 454**
**FR - A - 1 304 732**
**FR - A - 1 562 364**
**FR - A - 1 598 813**
**FR - A - 1 598 814**
**FR - A - 2 191 702**
**FR - E - 80 379**
**GB - A - 2 054 731**
**US - A - 2 691 406**
**US - A - 2 865 428**

(73) Titulaire: **A. & M. Cousin et Cie, Le Bois de Flers,
F-61103 Flers Cédex Orne (FR)**

(72) Inventeur: **Pipon, Yves, La Garenne St Georges des
Groseillers, 61100 Flers (FR)**
Inventeur: **Droulon, Georges, rue de la Garenne St
Georges des Groseillers, 61100 Flers (FR)**

(74) Mandataire: **Madeuf, Claude Alexandre Jean et al,
CABINET MADEUF 3, avenue Bugeaud, F-75116 Paris
(FR)**

## Description

La présente invention a pour objet un dispositif permettant le réglage de l'assiette de l'assise d'un siège utilisé dans des véhicules terrestres, nautiques et aériens afin d'améliorer le confort et, par là, renforcer la sécurité surtout en ce qui concerne le siège du conducteur.

On connaît déjà de nombreux dispositifs permettant de régler l'assiette, c'est-à-dire la hauteur de l'assise d'un siège, en réglant la hauteur soit de la partie arrière du siège, soit de la partie avant et même simultanément de la partie avant et de la partie arrière du siège (US-A-2691406). Toutefois, ces dispositifs sont, d'une part, assez compliqués, encombrants et lourds et, d'autre part, d'un réglage délicat surtout pour une personne non expérimentée d'où une utilisation peu rationnelle.

De plus, et du fait, d'une part, d'un faible volume de l'habitacle du véhicule et, d'autre part, des hautes caractéristiques techniques imposées par les normes, on a été amené à repenser entièrement ce problème pour lui apporter une solution aussi simple que possible, en créant un dispositif peu volumineux, d'un réglage très facile pour l'utilisateur et d'une très haute résistance puisque ces dispositifs en liaison avec les glissières de réglage longitudinales doivent supporter, en cas de chocs, des efforts considérables permettant l'absorption d'énergie et donc de limiter les blessures du passager ou du conducteur puisque celui-ci est maintenu sur le siège par une ceinture de sécurité solidaire des organes prémentionnés.

La présente invention remédie à ces inconvénients en créant un dispositif de réglage de l'assiette de l'assise du siège, simple, peu volumineux, facile à régler et d'une très haute résistance pour absorber beaucoup d'énergie en cas de chocs mais également pour donner une suspension stable sans jeu, augmentant ainsi le confort du passager.

Conformément à l'invention, le dispositif permettant le réglage de l'assiette d'un siège de véhicule, dans lequel la face supérieure de chaque profilé supérieur de glissière supporte deux équerres dont les ailes verticales maintiennent à leurs extrémités supérieures, soit à l'avant, soit à l'arrière du siège, des axes sur lesquels est articulée une équerre-semelle, est caractérisé en ce que l'une ou l'autre des équerres arrière ou avant porte une ferrure d'articulation qui est soit du type à engrenages épicycloïdaux, soit d'un type par coincement au moyen de grains, ce qui permet, à l'aide d'un levier démultiplicateur pouvant tourner avec le flasque mobile de chaque articulation, l'élévation de l'équerre-semelle correspondante arrière ou avant de façon que l'armature du siège fixée sur les équerres-semelles puissent se déplacer d'un angle de débattement délimité selon les besoins soit pour la partie arrière du siège, soit pour la partie avant du siège entre un point mort bas et un point mort haut.

Diverses autres caractéristiques de l'invention ressortent d'ailleurs de la description détaillée qui suit.

Des formes de réalisation de l'objet de l'invention sont représentées, à titre d'exemples non limitatifs, au dessin annexé.

La fig. 1 est une élévation latérale du dispositif permettant le réglage de l'assiette de l'assise d'un siège par sa partie arrière.

La fig. 2 est un plan correspondant à la fig. 1.

La fig. 3 montre, en élévation, un dispositif identique à celui de la fig. 1 mais destiné au réglage de la partie avant du siège.

La fig. 4 est une élévation de face partielle de la partie droite du dispositif de la fig. 3.

La fig. 5 est un plan correspondant à la fig. 3.

La fig. 6 est une élévation latérale d'un dispositif permettant le réglage manuel de l'assiette du siège par l'élévation des parties avant et arrière du siège.

La fig. 6a est une vue, à grande échelle, d'une partie de la fig. 6.

La fig. 7 est un plan correspondant à la fig. 6.

La fig. 8 montre une variante de réalisation du dispositif de réglage avant et arrière de l'assise du siège manuellement soit pour la partie arrière, soit pour la partie avant ou simultanément pour les parties arrière et avant avec possibilité de télécommande motrice.

La fig. 9 est un plan correspondant à la fig. 8.

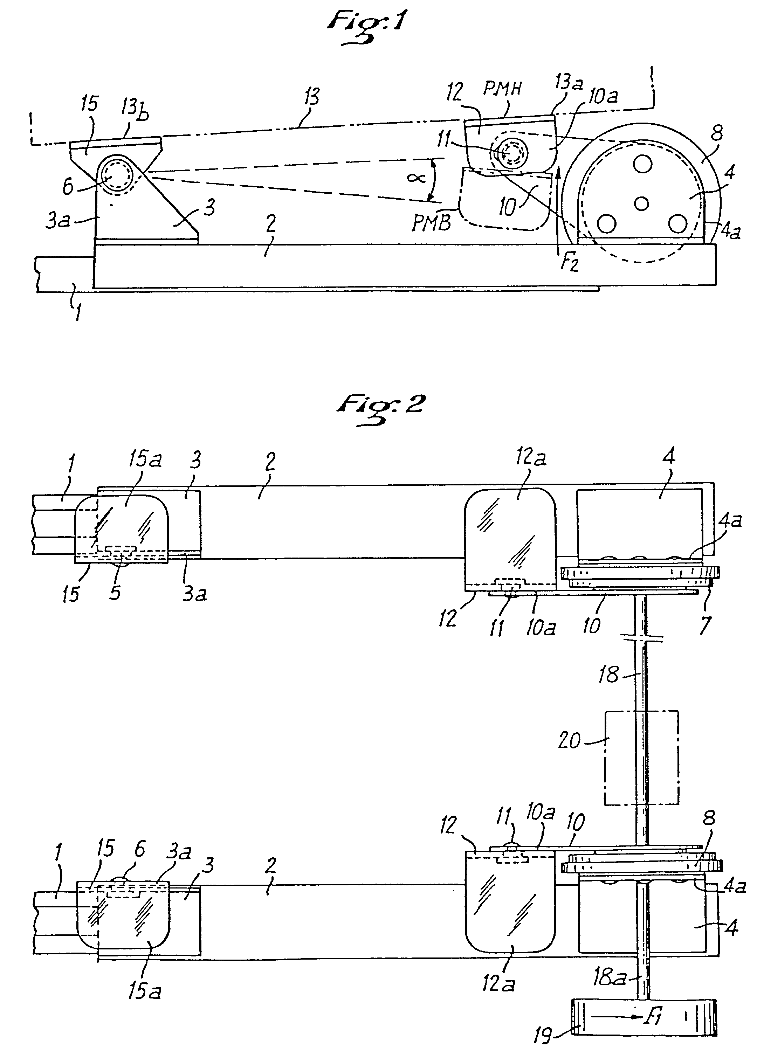

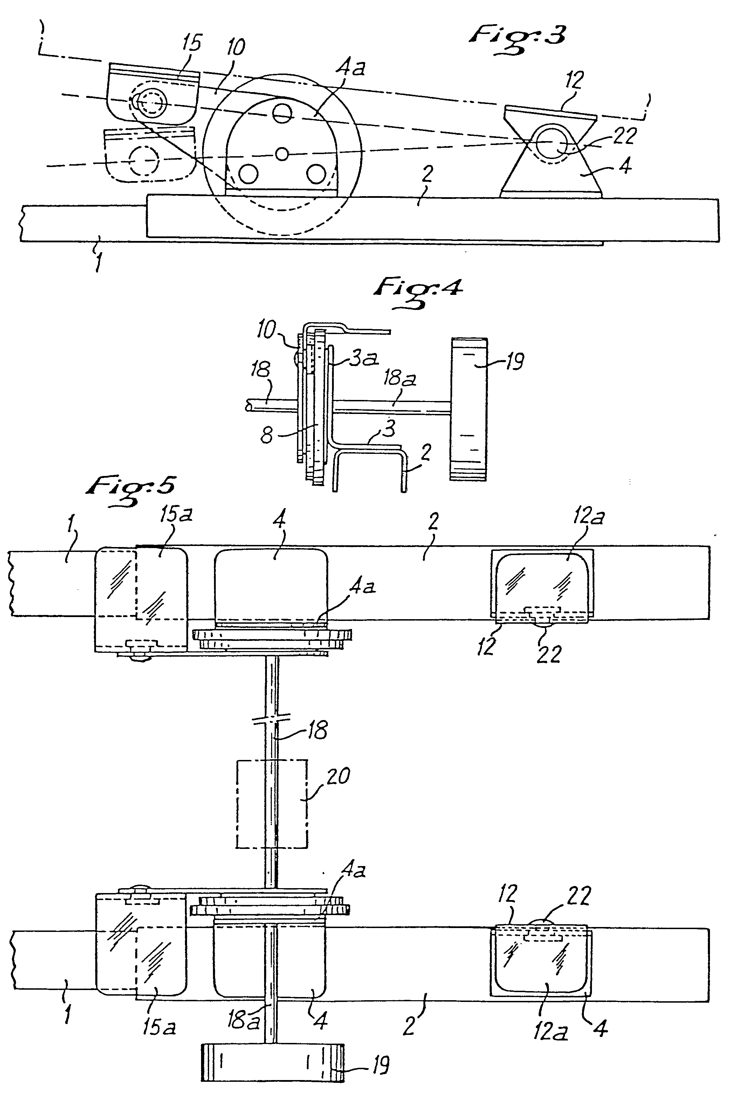

A la fig. 1, on a représenté partiellement le profilé inférieur 1 et le profilé supérieur 2 d'une glissière permettant le réglage longitudinal avant et arrière de la position d'un siège.

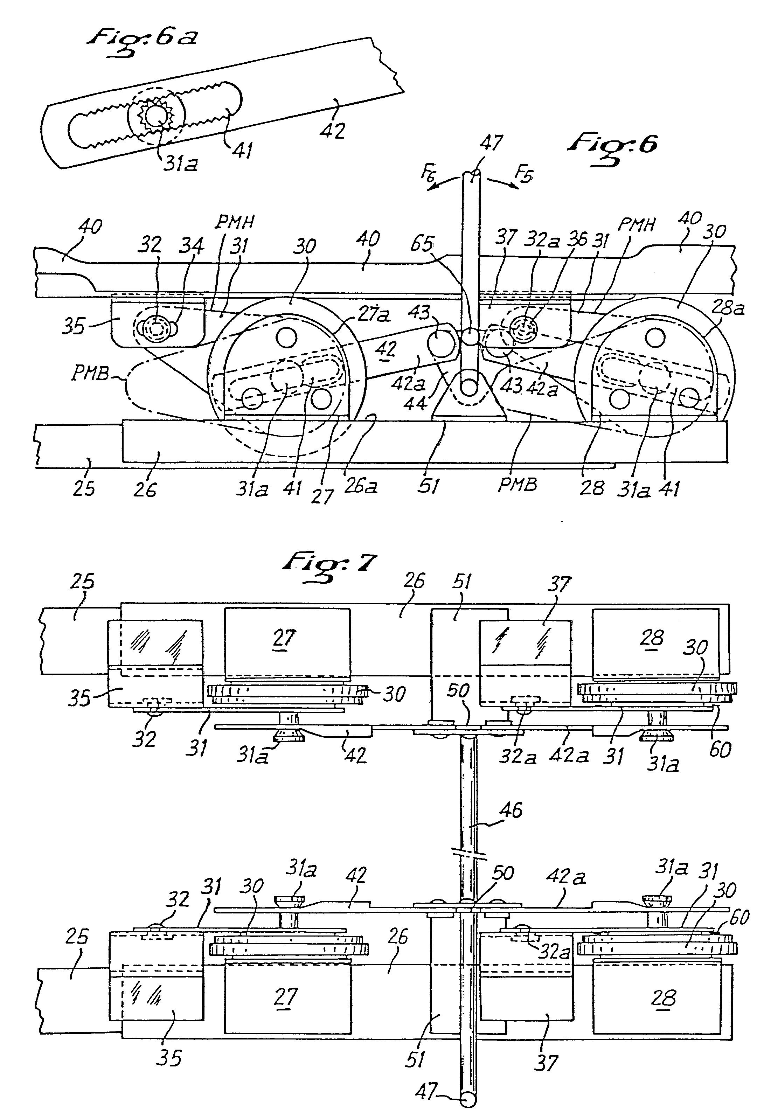

Bien entendu, il existe, comme représenté à la fig. 2, deux glissières parallèles placées sous les parties droite et gauche de chaque siège.

La face supérieure du profilé supérieur 2 porte, à des emplacements bien définis suivant le type de siège des équerres 3, 4 dont les ailes verticales 3a, 4a servent de supports, pour les ailes 3a à des axes 5, 6 et pour les ailes 4a à des ferrures d'articulations 7, 8 qui peuvent être des articulations à grains, des articulations discontinues ou des articulations continues basées soit sur des dispositifs de blocage par coincement, soit par des engrenages épicycloïdaux ou par tout autre dispositif correspondant pouvant être placé à l'intérieur d'une couronne de très faible épaisseur.

Dans le cas présent, il s'agit d'articulations épicycloïdales irréversibles micrométriques permettant donc un choix important de positions entre un point mort haut et un point mort bas, le point mort bas étant représenté à la fig. 1 en traits discontinus PMB, et le point mort haut en trait continu PMH.

Le flasque mobile de chaque articulation 7, 8 est solidaire d'un levier démultiplicateur 10 de forme sensiblement triangulaire dont l'extrémité 10a porte un axe 11 sur lequel est montée une équerre-semelle 12 dont la face supérieure 12a supporte la partie arrière 13a de l'armature 13 d'un siège.

Les équerres-semelles avant 15 montées sur les axes 5, 6 présentent également une face supérieure 15a sensiblement horizontale et qui supporte l'avant 13b de l'armature 13 du siège.

En général, et dans le cas des fig. 1 et 2, les articulations 7 et 8 sont reliées entre elles par un organe de jonction 18 tel qu'un arbre entraîné normalement, à son extrémité 18a placée à l'extrémité extérieure arrière du siège, par un bouton de manœuvre 19.

Ainsi, en faisant tourner le bouton 19 dans le sens de la flèche $F_1$ (fig. 2), on entraîne en rotation les articulations 7, 8 qui font pivoter vers le haut, c'est-à-dire dans le sens de la flèche $F_2$ (fig. 1), les leviers démultiplicateurs 10 entraînant, de ce fait, les équerres-semelles arrière 12 vers le haut. Si l'on part de la position PMB (fig. 1) pour aller vers la position PMH (fig. 1), on a soulevé l'arrière du siège d'un angle de débattement α qui, selon les besoins, peut varier suivant le type de siège et le type de véhicule à équiper.

Bien entendu, la rotation des leviers démultiplicateurs entraîne une rotation des équerres-semelles avant 15 sur les axes 5, 6.

Il est également possible comme le montre la fig. 2 de prévoir l'entraînement de l'articulation de l'arbre de jonction 18 par un groupe moteur 20 qui est le plus souvent un moteur électrique dont le fonctionnement est soumis au contrôle d'un circuit électronique commandé depuis le tableau de bord du véhicule soit par une fraction d'angle à chaque fois, soit d'une manière continue entre le point le plus bas et le point le plus haut à la volonté de l'utilisateur.

Ainsi, le dispositif des fig. 1 et 2 permet un réglage continu depuis un point mort bas jusqu'à un point mort haut ou d'un point mort haut jusqu'à un point mort bas. La partie arrière de l'assise du siège se trouve donc être placée dans la position choisie par l'utilisateur.

A la fig. 3, le dispositif est identique à celui de la fig. 1 mais, là, c'est la partie avant du siège qui est soulevée par les leviers démultiplicateurs 10 qui portent les équerres-semelles avant 15 tandis que les équerres-semelles arrière 12 sont simplement montées sur des axes 22 solidaires des équerres 4.

Comme dans le cas précédent, on peut avoir soit une commande manuelle avec bouton de commande 19, soit, monté sur l'arbre 18, un groupe moteur 20 en général constitué par un moteur électrique commandé comme expliqué ci-dessus.

A la fig. 6 sont représentés, d'une part partiellement, le profilé inférieur 25 et, d'autre part entièrement, le profilé supérieur 26 d'une glissière permettant le réglage longitudinal du siège.

La face supérieure 26a du profilé 26 porte deux équerres 27, 28 dont les ailes verticales 27a, 28a maintiennent comme précédemment décrit des articulations 30 dont le flasque mobile est rendu solidaire des leviers démultiplicateurs 31 présentant, chacun à leur extrémité, un axe 32, 32a.

Les axes 32 sont logés dans des boutonnières 34 des équerres-semelles avant 35 tandis que les axes 32a sont logés dans des trous 36 des équerres-semelles arrière 37, les équerres-semelles 35, 37 portent la partie inférieure 40 de l'armature du siège.

Dans le cas de la fig. 6, les leviers démultiplicateurs 31 sont dans la position du point mort haut PMH, mais on a représenté en traits discontinus la position de ces leviers 31 au point mort bas PMB. Ainsi, on peut voir aisément l'angle de débattement délimité selon les besoins.

Dans le cas présent, les articulations 30 sont en général du type à grains de façon que la rotation de leur arbre central 31a provoque la rotation d'une commande permettant de bloquer ou de débloquer suivant le sens de rotation un ou des grains afin de rendre solidaires les flasques fixe et mobile de l'articulation, étant entendu que le flasque fixe est maintenu sur les ailes 28a par des équerres 28 tandis que le flasque mobile est solidaire des leviers démultiplicateurs 31.

L'angle de rotation de chaque arbre 31a est obtenu par l'intermédiaire de lumières dentées 41 percées dans des bras 42 engrenant avec des dentures réalisées sur le pourtour de chaque arbre 31a afin d'obtenir un entraînement impératif (fig. 6a). Chaque arbre 31a est, comme représenté au dessin, logé dans une lumière dentée 41.

Les extrémités 42a du bras 42 sont montées sur des axes 43 solidaires d'une pièce triangulaire 44, elle-même rendue solidaire d'un arbre de commande 46 présentant un levier de manœuvre vertical 47. L'arbre 46 repose dans des paliers lisses percés dans les ailes verticales 50 des équerres 51 solidaires de la partie centrale du dessus du profilé supérieur 26 de la glissière 25.

Si l'on fait pivoter le levier de commande 47 dans le sens de la flèche $F_5$ (fig. 6), on débloque les articulations arrière 30, puis les deux bras 42 effectuent un déplacement provoquant la rotation de chaque arbre central 31a de sorte que le flasque mobile de chaque articulation 30 est libéré et, par suite, chaque levier démultiplicateur arrière peut se déplacer dans le sens voulu par l'occupant du siège qui peut alors, en exerçant une poussée sur l'arrière du siège, faire descendre ce dernier lorsqu'il trouve que l'arrière de l'assise de ce siège est trop haut ou, au contraire, soulever l'arrière de l'assise en s'aidant d'un ressort non représenté ayant un point fixe sur la partie fixe de chaque articulation 30 et un point mobile libre sur chaque levier démultiplicateur 31.

Dans le cas où le levier de commande 47 est pivoté dans le sens de la flèche $F_6$ (fig. 6), le fonctionnement est identique puisque le pivotement de ce levier de commande 47 a permis:

a) de ramener les bras 42 de l'arrière vers l'avant et de ce fait de bloquer les articulations 30 dans la position choisie de l'arrière de l'assise du siège, et

b) de débloquer les articulations avant 30 en libérant ainsi les leviers démultiplicateurs 31 permettant l'élévation ou l'abaissement de la partie avant de l'assise du siège entre les positions PMH et PMB ou PMB et PMH.

Du fait de la disposition des organes de réglage et du pivotement des leviers démultiplicateurs 31, les axes avant 32 se déplacent correctement dans les boutonnières 34 en assurant, d'une part, la possibilité de réglage de l'assiette de l'assise du siège et, d'autre part, un rattrapage des jeux pouvant se produire.

En ramenant le levier de commande 47 dans sa position verticale, on assure le blocage des articulations avant 30 et ainsi le verrouillage complet du dispositif permettant le réglage vertical de l'assiette de l'assise du siège.

Par mesure de sécurité et pour éviter un déplacement intempestif du levier 47 provoquant un déréglage avant ou arrière du siège, il est prévu de maintenir le levier de commande 47 dans sa position médiane verticale au moyen d'un dispositif de blocage complémentaire 65 qui peut affecter d'autres formes de réalisation.

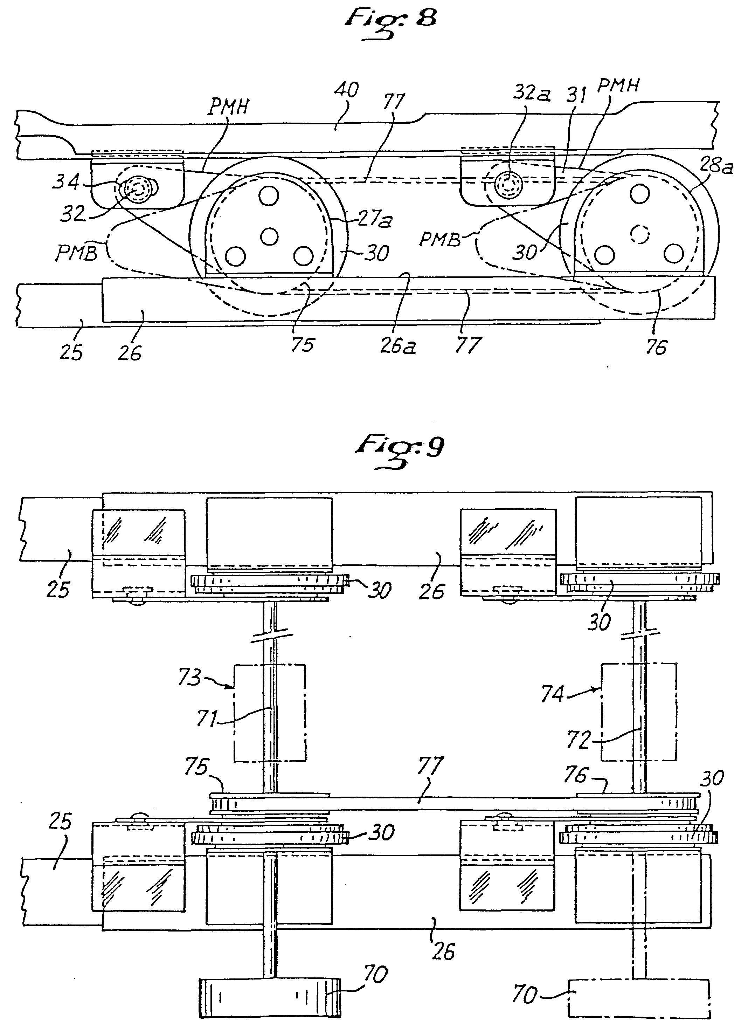

A la fig. 8, on a représenté un dispositif permettant le réglage de l'assiette d'un siège de véhicule qui comporte les mêmes éléments que le dispositif suivant la forme de réalisation de la fig. 6 mais, dans ce cas, les articulations 30 sont commandées deux à deux (articulations avant et articulations arrière) soit à l'aide d'un organe de manœuvre 70 monté dans le prolongement des arbres 71, 72 reliant deux à deux les articulations avant et arrière 30, soit à l'aide de groupes moteurs 73, 74 pouvant être soumis au contrôle d'une télécommande de fonctionnement placée sur le tableau de bord du véhicule, soit même en fixant sur les arbres 71, 72 des poulies 75, 76 reliées par une courroie sans fin 77 pour obtenir, au moyen d'un unique groupe moteur ou de l'organe 70, l'entraînement simultané des articulations 30. Dans ce cas, les articulations sont épicycloïdales afin que la rotation en avant et en arrière des articulations précitées permette le réglage en hauteur de l'assiette de l'assise du siège comme cela a été expliqué ci-dessus en détail. Dans le cas où les groupes moteurs 73, 74 actionnant le réglage en hauteur de l'assise du siège sont contrôlés par une télécommande électronique, celle-ci peut comporter une mémoire pour obtenir rapidement la position de l'assise suivant l'utilisateur.

A titre de remarque subséquente, et dans le cas des réglages avant-arrière représentés aux fig. 6 à 9, les boutonnières 34 peuvent être placées tantôt à l'avant tantôt à l'arrière des dispositifs de rehausse suivant le type de véhicule et de siège considéré.

## Revendications

1. Dispositif permettant le réglage de l'assiette d'un siège de véhicule, dans lequel la face supérieure de chaque profilé supérieur (2) de glissière supporte deux équerres (3, 4) dont les ailes verticales (3a, 4a) maintiennent, à leurs extrémités supérieures, soit à l'avant, soit à l'arrière du siège, des axes (5, 6, 11, 22) sur lesquels est articulée une équerre-semelle (15, 12), caractérisé en ce que l'une ou l'autre des équerres arrière (4) ou avant (3) porte une ferrure d'articulation (7, 8, 30) qui est soit du type à engrenages épicycloïdaux, soit d'un type par coincement au moyen de grains, ce qui permet, à l'aide d'un levier démultiplicateur (10) pouvant tourner avec le flasque mobile de chaque articulation (7, 8), l'élévation de l'équerre-semelle correspondante arrière (12) ou avant (15) de façon que l'armature (13) du siège fixée sur les équerres-semelles (15, 15a, 12, 12a) puisse se déplacer d'un angle de débattement (α) délimité selon les besoins soit pour la partie arrière du siège, soit pour la partie avant du siège entre un point mort bas (PMB) et un point mort haut (PMH).

2. Dispositif selon la revendication 1, caractérisé en ce que la commande des articulations (7, 8) est réalisée au moyen d'un arbre de jonction (18) dont le prolongement (18a) est muni d'un bouton de commande (19).

3. Dispositif selon l'une des revendications 1 et 2, caractérisé en ce que l'arbre de jonction (18) est soumis à l'action d'un moteur électrique (20) dont l'alimentation est contrôlée par un circuit électronique commandé à partir du tableau de bord du véhicule.

4. Dispositif suivant la revendication 1, caractérisé en ce que sur les ailes verticales (27a, 28a) sont montées quatre équerres (27, 28) fixées sur la face supérieure (26a) du profilé supérieur (26) de chaque glissière des articulations (30), dont le flasque mobile commande la rotation de leviers démultiplicateurs (31) reliés par des axes (32) aux équerres-semelles (35, 37) supportant l'armature (40) du siège de façon qu'à l'aide d'un levier de commande (47) pouvant pivoter autour d'un arbre (46), vers l'arrière lorsque l'on déverrouille les articulations arrière (30) et vers l'avant lorsque l'on déverrouille les articulations avant (30) pour obtenir la libération des leviers démultiplicateurs (31) qui, en pivotant soit vers un point mort haut (PMH), soit vers un point mort bas (PMB), provoquent l'abaissement ou l'élévation de l'arrière ou de l'avant du siège, les articulations (30) placées d'un même côté du siège étant bloquées et débloquées par des bras (42) articulés par l'intermédiaire d'une pièce triangulaire (44) à l'une de leurs extrémités et à leur autre extrémité sur les arbres (31a) des articulations (30) permettant leur déblocage et leur blocage, les deux pièces triangulaires (44) placées de part et d'autre du siège étant montées sur l'arbre (46) du levier de commande (47).

5. Dispositif selon la revendication 4, caractérisé en ce que les articulations (30) sont verrouillées et déverrouillées à partir de l'arbre de commande (46) portant les pièces triangulaires (44) commandant le mouvement des bras (42) au moyen d'un moteur électrique dont l'alimentation est contrôlée par un circuit électronique commandé à partir du tableau de bord du véhicule.

6. Dispositif selon la revendication 4, caractérisé en ce que le mouvement de rotation des articulations (30) est obtenu à l'aide de deux moteurs électriques (73, 74) montés sur les arbres (71, 72) reliant transversalement les articulations avant et arrière, ces moteurs étant soumis au contrôle d'un circuit électronique pouvant comporter une mémoire.

7. Dispositif selon la revendication 4, caractérisé en ce que les quatre articulations (30) commandant les mouvements d'élévation ou d'abaissement de l'assise du siège sont obtenues à partir d'un organe de manœuvre manuelle (70) et de poulies (75, 76) montées sur les arbres (71, 72) reliant transversalement deux à deux les articulations (30), les poulies (75, 76) étant reliées par une courroie (77).

## Patentansprüche

1. Vorrichtung zum Einstellen eines Sitzteils eines Fahrzeugsitzes, bei welcher die obere Fläche jedes oberen Gleitprofils (2) zwei Winkelstücke (3, 4) trägt, deren vertikale Flügel (3a, 4a) an ihren oberen Enden vor oder hinter dem Sitz Achsen (5, 6, 11, 22) aufweisen, auf welchen ein Bodenwinkel (15, 12) angelenkt ist, dadurch gekennzeichnet, dass das eine oder andere hintere (4) oder vordere Winkelstück (3) einen Anlenkbeschlag (7, 8, 30) trägt, welcher entweder von der Art epicykloidischer Zahnräder oder Klemmkugeln ist und mit Hilfe eines Untersetzungshebels (10), welcher sich mit dem beweglichen Flansch jeder Anlenkung (7, 8) drehen kann, die Hebung des korrespondierenden hinteren Bodenwinkels (12) oder vorderen (15) ermöglicht, so dass sich der auf den Bodenwinkeln (15, 15a, 12, 12a) befestigte Rahmen (13) um einen Winkel (α) verstellen kann, entsprechend den Erfordernissen, sei es am hinteren Teil des Sitzes oder am vorderen desselben zwischen einem unteren Totpunkt (PMB) und einem oberen Totpunkt (PMH).

2. Vorrichtung nach Anspruch 1, dadurch gekennzeichnet, dass die Steuergelenke (7, 8) aus einer Verbindungsachse (18) bestehen, deren Verlängerung (18a) ein Verstellrad (19) trägt.

3. Vorrichtung nach einem der Ansprüche 1 und 2, dadurch gekennzeichnet, dass die Steuerachse (18) unter dem Einfluss der Wirkung eines Elektromotors (20) steht, welcher durch einen elektronischen Kreis gesteuert ist, der vom Armaturenbrett des Fahrzeuges gesteuert ist.

4. Vorrichtung nach Anspruch 1, dadurch gekennzeichnet, dass auf dem vertikalen Flügel (27a, 28a) Winkelstücke (27, 28) angeordnet sind, welche auf der oberen Fläche (26a) des oberen Profils (26) eines jeden Gleitstückes der Gelenke (30) fixiert sind, dessen beweglicher Flansch die Drehung der Untersetzungshebel (31) steuert, welche durch die Achsen (32) mit den Bodenwinkeln (35, 37) verbunden sind, die die Armatur (70) des Sitzes tragen, so dass sie mit Hilfe eines Steuerhebels (47) um die Achse (46) nach hinten schwenken können, wenn die hinteren Gelenke (30) gelöst sind, und nach vorne, wenn die vorderen Gelenke (30) gelöst sind, um die Freigabe der Untersetzungshebel (31) zu erzielen, welche beim Verschwenken zum oberen Totpunkt (PMH) oder zum unteren Totpunkt (PMB) das Absenken oder das Heben des hinteren oder des vorderen Sitzteiles bewirken wird, wobei die auf gleicher Seite des Sitzes liegenden Gelenke (30) durch Arme (42) geklemmt und gelöst werden, welche an einem ihrer Enden und am anderen Ende mittels eines Dreieckstückes (44) auf den Achsen (31a) der Gelenke (30) angelenkt sind, welche das Lösen und Klemmen der Arme erlauben, wobei die beiden Dreieckstücke (44), welche auf der einen oder anderen Seite des Sitzes angeordnet sind, auf der Achse (46) des Steuerhebels (47) angeordnet sind.

5. Vorrichtung nach Anspruch 4, dadurch gekennzeichnet, dass die Gelenke (30) mittels einer Steuerachse (46) klemmbar und lösbar sind, welche die Dreieckstücke (44) trägt, die die Bewegung der Arme (42) mittels eines elektrischen Motors steuert, dessen Antrieb mittels eines elektronischen Kreises gesteuert ist, welcher vom Armaturenbrett des Fahrzeuges steuerbar ist.

6. Vorrichtung nach Anspruch 4, dadurch gekennzeichnet, dass die Drehbewegung der Gelenke (30) mit Hilfe zweier elektrischer Motore (73, 74) durchgeführt ist, die auf den Achsen (71, 72) angebracht sind, welche die vorderen und hinteren Gelenke in Querrichtung verbinden, wobei die Motore durch einen elektronischen Kreis steuerbar sind, der einen Speicher aufweisen kann.

7. Vorrichtung nach Anspruch 4, dadurch gekennzeichnet, dass die vier Gelenke (30), welche die Hub- und Senkbewegungen der Sitzteile steuern, durch Handbetätigungsorgane (70) und Riemenscheiben (75, 76) erhalten werden, die auf den Achsen (71, 72) angebracht sind, welche die Gelenke (30) in Querrichtung paarweise verbinden, wobei die Riemenscheiben (75, 76) durch einen Riemen (77) verbunden sind.

## Claims

1. Device enabling the adjustment of the trim of a vehicle seat, in which the upper side of each slide member upper section (2) carries two square members (3, 4) the vertical wings (3a, 4a) of which maintain, at their upper ends, either frontwardly or rearwardly of the seat, spindles (5, 6, 11, 22) on which is articulated a shoe-square (15, 12), characterized in that either one of the rear (4) or front (3) square members carries an articulation fitting (7, 8, 30) which is either of the epicyclic gear type or of a wedging type by means of bearing plates, which enable, by means of a reduction lever (10) rotatable with the mobile flange of each articulation (7, 8), the raise of the corresponding rear (12) or front (15) shoe-square in order that the seat frame (13) fixed on the shoe-squares (15, 15a, 12, 12a) can be displaced by a clearance angle (α) delimited according to the needs either for the rear part of the seat, or for the front part of the seat between a lower dead-point (PMB) and an upper dead-point (PMH).

2. Device according to Claim 1, characterized in that the control of the articulations (7, 8) is provided by means of a connecting shaft (18) the extension (18a) of which is provided with a control knob (19).

3. Device according to one of Claims 1 and 2, characterized in that the connecting shaft (18) is submitted to the action of an electric motor (20) the power supply of which is controlled by an electronic circuit driven from the dash-board of the vehicle.

4. Device according to Claim 1, characterized in that on the vertical wings (27a, 28a) are mounted four square members (27, 28) fixed on the upper side (26a) of the upper section (26) of each slide member of the articulations (30) the mobile flange of which controls the rotation of reduction levers (31) connected by means of spindles (32) to the shoe-squares (35, 37) supporting the seat frame (40) so that by means of a control lever (47) able to pivot around a shaft (46), rearwardly when the rear articulations (30) are unlocked and frontwardly when the front articulations (30) are unlocked for obtaining the freeing of the reduction levers (31) which, by pivoting either to an upper dead-point (PMH) or to a lower dead-point (PMB), cause the lowering or the raise of the rear or front part of the seat, the articulations (30) placed on a same side of the seat being locked and unlocked by means of arms (42) articulated through a triangular part (44) at one of their ends and at their other end on the shafts (31a) of the articulations (30) enabling their unlocking and their locking, the two triangular parts (44) placed on both sides of the seat being mounted on the shaft (46) of the control lever (47).

5. Device according to Claim 4, characterized in that the articulations (30) are locked and unlocked from the control shaft (46) bearing the triangular parts (44) controlling the movement of the arms (42) by means of an electric motor the power supply of which is controlled by an electronic circuit driven from the dash-board of the vehicle.

6. Device according to Claim 4, characterized in that the rotation movement of the articulations (30) is obtained by means of two electric motors (73, 74) mounted on the shafts (71, 72) transversely connecting the front and rear articulations, these motors being submitted to the control of an electronic circuit able to comprise a memory.

7. Device according to Claim 4, characterized in that the four articulations (30) controlling the movements of raise or lowering of the seat frame are obtained from a manual handling means (70) and pulleys (75, 76) mounted on the shafts (71, 72) transversely connecting two by two the articulations (30), the pulleys (75, 76) being connected by a belt (77).

*Fig:1*

*Fig:2*

7

Fig.3

0 200 576

Fig.4

Fig.5

Fig:6a

0 200 576

Fig:6

Fig:7

## Fig. 8

## Fig. 9